# EUROPÄISCHE PATENTANMELDUNG

(11) **EP 4 008 968 A1**
(43) Veröffentlichungstag der Anmeldung: **08.06.2022**
(21) Anmeldenummer: 21212134.7
(22) Anmeldetag: 03.12.2021
(51) Int. Cl.: F24D 3/14, D04H 1/435

(54) **VERLEGEVORRICHTUNG FÜR LEITUNGEN EINER FLÄCHENTEMPERIERVORRICHTUNG**

(30) Priorität: 03.12.2020 DE 202020106972 U
(71) Anmelder: herotec GmbH Flächenheizung, 59227 Ahlen-Vorhelm (DE)
(72) Erfinder: Lammering, Wilfried, 59227 Ahlen-Vorhelm (DE)
(74) Vertreter: dompatent von Kreisler Selting Werner - Partnerschaft von Patent- und Rechtsanwälten mbB

(57) **Zusammenfassung**

Die Verlegevorrichtung für Leitungen einer Flächentemperiervorrichtung, insbesondere einer Fußboden- oder Wandheizung, sowie zur Auflage auf einem Untergrund, insbesondere auf einem Wärmedämm- und/oder Trittschaltdämmuntergrund, ist mit einer Vliesdeckschicht (12) mit einer Unterseite zur Auflage auf einen Untergrund und mit einer Oberseite zur Fixierung von mindestens einer Leitung einer Flächentemperiervorrichtung, insbesondere einem Kühl- oder Heizmedium führendem Rohr (18) oder einem Heizleiter versehen. Die Vliesdeckschicht (12) weist Fasern, insbesondere Stapelfasern auf, die durch mechanische und/oder thermische Fixierungen miteinander verbunden sind. Zumindest die Fasern sind in einer die Unterseite der Vliesdeckschicht (12) bildenden unteren Lage (28) neben einer mechanischen Fixierung auch thermisch verbunden. Zumindest die Fasern sind in einer die Oberseite der Vliesdeckschicht (12) bildenden oberen Lage (27) hydrophob oder hydrophobisiert. Die Oberseite der Vliesdeckschicht (12) ist aufgeraut. Die Vliesdeckschicht (12) weist Polyesterfasern auf oder besteht aus Polyesterfasern. Die Vliesdeckschicht (12) weist eine Grammatur zwischen 50g/m² und 180g/m² oder zwischen 80g/m² bis 150g/m² und eine Faserfeinheit zwischen 1,0 dtex und 50,0 dtex auf.

## Beschreibung

Die Erfindung betrifft eine Verlegevorrichtung für Leitungen einer Flächentemperiervorrichtung, insbesondere einer Fußboden- oder Wandheizung, sowie zur Auflage auf einem Untergrund, insbesondere auf einem Wärmedämm- und/oder Trittschaltdämmuntergrund.

Verlegevorrichtungen für Kühl- oder Heizmedium führende Rohre werden beispielsweise bei Flächentemperiervorrichtungen, also bei beheizten oder gekühlten Flächen beispielsweise eines Gebäudes eingesetzt. Ihre Aufgabe besteht darin, die Rohre nach der Verlegung zu fixieren. Verlegevorrichtungen in Form von Kunststoff-Noppenplatten oder Wärmedämmplatten mit eingearbeiteten Rohraufnahmenuten sind grundsätzlich bekannt. Ferner ist es bekannt, die Rohre von Flächentemperiervorrichtungen auf "glatten" Deckschichten mittels U-förmigen krampenartigen Niederhalteelementen oder mittels Verlegeschienen mit Rohrklemmnuten zu fixieren.

Seit einigen Jahren werden im zunehmenden Maße für die Fixierung von Rohren von Flächentemperiervorrichtungen auf einem Untergrund Klettverschlusssysteme eingesetzt. Dabei weist die Verlegevorrichtung eine mehrschichtige Verlegefolie auf, die unter anderem eine im Regelfall reißfeste Gewebeschicht und eine weitere Fasermaterialschicht auf, während die Außenseite des zu verlegenden Rohres die von Klettverschlüssen bekannten mechanischen Verhakungselemente aufweist. Sobald das Rohr in Kontakt mit der Fasermaterialschicht der die Gewebeschicht aufweisenden Deckschicht gelangt, verhaken sich die Verhakungselemente mit den Fasern, womit der Verlegeprozess des Rohres deutlich vereinfacht ist. Beispiele für derartige Verlegesysteme für Flächentemperiervorrichtungsrohre sind in DE-U-20 2010 009 431, DE-U-20 2014 105 276 und DE-U-20 2015 100 914 beschrieben. In DE-U-20 2018 006 107 und DE-A-10 2018 100 374 ist jeweils eine durchgehend als Vliesdeckschicht ausgebildete Verlegevorrichtung beschrieben.

Aufgabe der Erfindung ist es, eine verbesserte Verlegevorrichtung für Kühl- oder Heizmedium führende Rohre einer Flächentemperiervorrichtung zu schaffen, die hinsichtlich ihres Einsatzes, was die Arten der Fixierung der Leitungen betrifft, erweitert ist.

Zur Lösung dieser Aufgabe wird mit der Erfindung eine Verlegevorrichtung für Kühl- oder Heizmedium führende Rohre einer Flächentemperiervorrichtung, insbesondere einer Fußboden- oder Flächenheizung, vorgeschlagen, die versehen ist mit
- einer Vliesdeckschicht mit einer Unterseite zur Auflage auf einen Untergrund und mit einer Oberseite zur Fixierung von mindestens einer Leitung einer Flächentemperiervorrichtung, insbesondere einem Kühl- oder Heizmedium führendem Rohr oder einem Heizleiter,
- wobei die Vliesdeckschicht Fasern, insbesondere Stapelfasern aufweist, die durch mechanische und/oder thermische Fixierungen miteinander verbunden sind,
- wobei zumindest die Fasern in einer die Unterseite der Vliesdeckschicht bildenden unteren Lage neben einer mechanischen Fixierung auch thermisch verbunden sind,
- wobei zumindest die Fasern in einer die Oberseite der Vliesdeckschicht bildenden oberen Lage hydrophob oder hydrophobisiert sind,
- wobei die Oberseite der Vliesdeckschicht aufgeraut ist,
- wobei die Vliesdeckschicht Polyesterfasern aufweist oder aus Polyesterfasern besteht und
- wobei die Verlegedeckschicht eine Grammatur zwischen 50g/m² und 180g/m² oder zwischen 80g/m² bis 150g/m² und eine Faserfeinheit zwischen 1,0 dtex und 50,0 dtex aufweist.

Zur Lösung der zuvor genannten Aufgabe dient auch eine Flächentemperiervorrichtung, insbesondere eine Fußboden- oder Wandheizung, die versehen ist mit
- mindestens einer Leitung, insbesondere einem ein Kühl- oder Heizmedium führenden Rohr oder einem Heizleiter,
- einer Verlegevorrichtung für die mindestens eine Leitung nach einem der vorhergehenden Ansprüche,
- wobei die mindestens eine Leitung an ihrer Außenseite Verhakungselemente zum Verhaken mit der Vliesdeckschicht der Verlegevorrichtung aufweist und/oder
- wobei mit Verhakungselementen versehene Niederhalteelemente vorgesehen sind, die über die mindestens eine Leitung verlaufen und sich mittels ihrer Verhakungselemente mit der Vliesdeckschicht verhaken, und/oder
- wobei mit Widerhakenelementen versehene Niederhalteelemente zum Übergreifen der mindestens einen Leitung und zum Durchdringen der Vliesdeckschicht und zum Eintreiben in den Untergrund vorgesehen sind.

Erfindungsgemäß wird als Verlegevorrichtung lediglich eine Vliesdeckschicht eingesetzt, d.h. eine Deckschicht eingesetzt, die durchgehend über ihre gesamte Dicke betrachtet kein Gewebe, also weder verwebte noch verflochtene und noch verdrillte oder noch verstrickte Fasern aufweist. Die Vliesdeckschicht kann aus ein oder mehreren Lagen von Wirrfasern oder geordnete abgelegten Fasern bestehen, die mechanisch (z.B. durch Vernadeln) und/oder durch Verkleben (z.B. durch Zugabe eines Klebers) und/oder durch Verschmelzen miteinander verbunden sind. Das hergestellte Vlies kann oberseitig "aufgerauht" sein, so dass sich die Verhakungselemente eines "Klettrohres", d. h. eines Rohres mit Verhakungselementen, oder eines quer über ein Rohr gelegtes Niederhalteelement mit Verhakungselementen noch besser im Vlies verankern können.

Als Fasermaterial werden Kunststofffasern aus Polyester (PES) eingesetzt, die z.B. aus PES-Rezyklat oder -Regenerat bestehen. Alternativ können auch andere Kunststoffe als Fasermaterial verwendet werden. Die erfindungsgemäß vorgesehene Vliesdeckschicht weist durchgehend ein und denselben Textiltyp, nämlich Vliesmaterial auf.

Überraschenderweise hat sich bei der hinsichtlich der Herstellung, Handhabung, Logistik und Anwendung vorteilhaften Vliesdeckschicht ferner als vorteilhaft herausgestellt, dass sie durch entsprechende Wahl des Flächengewichts, der Faserdichte und der Dicke derart ausgelegt werden kann, dass sie estrichanmachwasserdicht ist, wenn, wie es an sich üblich ist, nach der Rohrverlegung Estrich oder Mörtel mit, wie von Estrich bekannt, ausreichend hohem Alkali-Anteil als weiterer Boden- bzw. Wandaufbau aufgebracht wird. Der angemachte Estrich oder Mörtel kann einen pH-Wert von vorzugsweise bis zu 12 aufweisen.

So ist erfindungsgemäß vorgesehen, dass die Vliesdeckschicht eine Grammatur zwischen 50g/m² und 180g/m² oder zwischen 80g/m² bis 150g/m² und eine Faserfeinheit zwischen 1,0 dtex und 50,0 dtex aufweist.

Durch entsprechende Wahl der Parameter der Vliesdeckschicht und durch eine Bearbeitung der Vliesdeckschicht kann diese estrichanmachwasserdicht ausgeführt werden. Hierfür eignen sich insbesondere Vliese aus synthetischem Spinnfasermaterial mit einem Flächengewicht zwischen 50g/m² und 180g/m², vorzugsweise 80g/m² und 150 g/m² und/oder einer Faserfeinheit von mindestens 0,1 dtex bis 120 dtex. Als Querschnitt für zu verwendende (vornehmlich Stapel-)Fasern hat sich ein Wertebereich von 1 dtex bis 50 dtex als vorteilhaft herausgestellt. Die Faserfeinheit und der Faserquerschnitt sind unter anderem auch von Bedeutung, wenn es um die Verbindung mit den Verhakungselementen eines Klettenverschlusssystems geht.

Vorteilhaft ist es, wenn zumindest die Fasern der unteren Lage Bikomponenten-Fasern aufweisen oder aus diesen bestehen, die mit einem Kern aus Polyester mit einem ersten Schmelzpunkt und mit einem Mantel aus Polyester mit einem gegenüber dem ersten den Kern maßgebenden Schmelzpunkt niedrigeren zweiten Schmelzpunkt versehen sind.

Die Vliesherstellung kann mechanische, thermische und/oder chemische Verfahrensschritte aufweisen. Insbesondere sollte das Vlies thermisch verfestigt sein, was beispielsweise durch Kalandrierung erfolgt. Die Fasern des Vlieses bzw. dem Vlies zusätzlich zugesetzte Fasern sind dabei als Schmelzfasern ausgeführt, die bei den Temperaturen, bei denen kalandriert wird, schmelzen und nach Abkühlung einzelne Verbindungspunkte zwischen den Fasern des Vlieses bilden. Diese Verbindungspunkte sollten nicht über die gesamte Dicke des Vlieses gegeben sein; es ist von Vorteil, wenn sie nur in einem unterseitigen Bereich des Vlieses entstehen, so dass vor allem die Oberseite des Vlieses "flauschig" bleibt, was der Klettfähigkeit dient. Eine zwei oder dreidimensional betrachtet zu dichte Verteilung von verschweißten Schmelzfasern kann sich negativ auf die Tackerfähigkeit des Vlieses auswirken, da die Tackernadeln dann das Vlies und insbesondere dessen unterseitige Lage nicht so leicht durchdringen können.

Durch die erstarrten Schmelzpunkte bildet sich eine weitere Verdichtung des Vlieses, was hinsichtlich der Dichtigkeit für mit Wasser angemachten Estrich, insbesondere Fließestrich, von Vorteil ist. Die Körnung des Estrichs setzt das Vlies in gewissen Grenzen weiter zu, verstopft es also sozusagen. Zusätzlich kann die Unterseite des Vlieses, die im Regelfall auf einer Wärmedämmschicht (oder einem anderen Untergrund) aufliegt, wärmebehandelt oder kalandert sein, so dass dort ebenfalls für eine verbesserte Dichtigkeit gegen angemachten Estrich gesorgt wird.

Des Weiteren kann es von Vorteil für den Einsatz der erfindungsgemäßen Vliesdeckschicht sein, wenn diese eine Dicke zwischen 0,5 mm und 1,5 mm bei 0,5kPa Auflast nach Norm DIN EN ISO 9073-2-1969 aufweist.

Die PES-Fasern der Vliesdeckschicht können bereichsweise unterschiedlich ausgestaltet/behandelt sein. So kann bspw. vorgesehen sein, dass die Vliesdeckschicht Polyester-Bikomponenten-Schmelzfasern mit einer Faserfeinheit zwischen 1,0 dtex und 6,7 dtex und einer Grammatur zwischen 5 g/m² und 20 g/m², hydrophobe oder hydrophobisierte Fasern mit einer Faserfeinheit zwischen 1,0 dtex und 6,7 dtex und einer Grammatur zwischen 10 g/m² und 80 g/m² und insbesondere im Bereich zwischen der oberen und der unteren Schicht befindliche Polyester-Fasern mit einer Faserfeinheit zwischen 1,5 dtex und 50,0 dtex und einer Grammatur zwischen 50 g/m² und 200 g/m² aufweist.

Wird die erfindungsgemäße Verlegevorrichtung auf Wärme- und/oder Trittschalldämmmaterial aufgebracht, das wiederum auf beispielsweise dem Rohboden- oder Rohwandaufbau aufliegt, so ist im Regelfall dafür Sorge zu tragen, dass Estrich- oder Mörtelmaterial durch die Vliesdeckschicht nicht ungehindert hindurchtreten kann, da andernfalls die Gefahr besteht, dass eine Verbindung zwischen dem Estrich- oder dem Mörtelmaterial mit dem Boden- bzw. Wandrohaufbau gegeben ist. Derartige Verbindungen bilden unerwünschte Wärme- bzw. Schallbrücken. Wenn allerdings, wie es im Renovationsbereich mitunter gegeben ist, die Flächentemperiervorrichtung auf einem bereits bestehenden Untergrund angebracht werden soll, so sind Verbundaufbauten zwischen dem Estrich- bzw. dem Mörtelmaterial und dem vorhandenen Untergrund tolerierbar. In derartigen Anwendungsfällen ist es daher zulässig, wenn die Vliesdeckschicht Aussparungen in Form von ausgeschnittenen und vorzugsweise ausgestanzten Löchern aufweist. Je nach Dicke der Vliesdeckschicht trägt diese dann also zum Gesamtaufbau der typischerweise nachgerüsteten Flächentemperiervorrichtung nicht bei, da sie in die aufgebrachte Estrich- bzw. Mörtelmaterialschicht als sozusagen unterste Lage (Unterseite des Estrichs bzw. des Mörtels) integriert ist.

Wie bereits oben erwähnt, lässt sich das Rohr der Flächentemperiervorrichtung unter Verwendung der Vliesdeckschicht als das eine Element eines Klettenverschlusssystems verwenden, während das Gegenelement, nämlich die sich mit den Fasern der Vliesdeckschicht verbindenden Verhakungselemente, beispielsweise an der Außenseite des Rohres angeordnet sind oder aber an Niederhalteelementen angeordnet sind, die das Rohr überspannen und queren. Beispielsweise ist es möglich, ein selbstklebendes Band mit Verhakungselementen helixförmig um das zu verlegende Rohr herum anzuordnen oder aber ein Stück eines derartigen Bandes über das Rohr quergelegt mit der Vliesdeckschicht zu verbinden.

In weiterer zweckmäßiger Ausgestaltung der Erfindung kann vorgesehen sein, dass die Oberseite der Vliesdeckschicht zur Fixierung von Rohren mittels durch die Vliesdeckschicht hindurch in den Untergrund eintreibbaren, mit Widerhaken versehenen Niederhalteelementen oder mittels auf der Oberseite der Vliesdeckschicht befestigten und insbesondere auf dieser verklebten Halteschienen mit Rohrklemmaufnahmenuten vorgesehen ist. Die Vliesdeckschicht weist also eine ausreichende Festigkeit auf, um das Rohr der Flächentemperiervorrichtung auch beispielsweise durch sogenannte Tackernadeln (im Wesentlichen U-förmige krampenartige Niederhalteelemente) zu fixieren. Diese Verlegetechnik erfordert es typischerweise, dass die mit Widerhaken versehenen Niederhalteelemente in den Untergrund eintreibbar sind. Die typischerweise verwendeten Wärme- und/oder Trittschalldämmmaterialien für Flächentemperiervorrichtungen erlauben dies. Die Tackernadeln sind auf Grund ihrer Widerhaken nach einem Durchdringen der Vliesdeckschicht gegen ein ungewolltes Herausziehen aus der Vliesdeckschicht gesichert. Aber auch sogenannte Verlege- bzw. Halteschienen mit Rohrklemmaufnahmen lassen sich auf der Oberseite der Vliesdeckschicht beispielsweise klebend sicher fixieren.

Als Wärme- und/oder Trittschalldämmmaterial, auf dem die erfindungsgemäße Verlegevorrichtung angeordnet werden kann, eignen sich grundsätzlich sämtliche diesbezüglich bekannten Materialien und insbesondere Mineralfasern, EPS, PE-Schaum, Kork, Sisal, tierische oder pflanzliche Wolle, Haare, Kokos, Heu, Getreidestroh, Hanf, Holzwolle, Holzfasern, Holzwolleverbundprodukte, Laub oder andere alternative Dämmstoffe oder nachwachsende dämmende Rohrstoffe und/oder einen Misch- oder Mehrlagenverbund der genannten Materialien.

Die erfindungsgemäße Vliesdeckschicht sollte auf dem Untergrund gegen ein unbeabsichtigtes Ablösen gesichert fixiert sein. Bei festem Untergrund (beispielsweise bestehende Bodenaufbauten im insbesondere Renovationsbereich bzw. bei bauseitig vorhandenem Wärme- und/oder Trittschalldämmmaterial, das eine gewisse Festigkeit aufweist) eignet sich zweckmäßigerweise eine Klebeverbindung, wobei der Kleber entweder zuvor auf das Dämmmaterial oder dem Bodenaufbau aufgebracht wird oder aber bereits an der Unterseite der Vliesdeckschicht vorhanden ist. Im letztgenannten Fall weist die Unterseite der Vliesdeckschicht eine abziehbare Schutzfolie auf.

Alternativ zu einer Verklebung eignet sich auch ein Vernähen der Vliesdeckschicht mit dem Wärme- und/oder Trittschalldämmmaterial, wie es beispielsweise in DE 20 2014 105 276 U1 beschrieben ist. Die Wasserdichtigkeit der Vliesdeckschicht leidet nicht durch das Vernähen mit Nahtmaterial; denn die Vliesdeckschicht kann, wie oben beschrieben, bei entsprechender Auslegung ihrer Parameter wie Flächengewicht, Faserdichte und Dicke estrichanmachwasserdicht ausgeführt werden.

Schließlich ist auch eine Ultraschall-Verschweißung der Vliesdeckschicht mit dem Untergrund möglich, und zwar lokal und über die Vliesdeckschicht verteilt.

Vorteilhafterweise ist die Vliesdeckschicht nicht brennbar bzw. nicht entflammbar ausgeführt, was beispielsweise durch den Zusatz von entsprechenden Materialien wie z. B. Wasserglas oder Zugabe entsprechender Fasermaterialien wie z.B. Aramid-Fasern erfolgt. Das Verhältnis der Mengenanteile von Hauptfasern, Schmelzfasern und hydrophoben Fasern und/oder das Dickenverhältnis ihrer Lagen macht es möglich, dass die Vliesdeckschicht den Anforderungen der Brandklasse B2 genügt; wenn zusätzlich auch flammhemmende Fasern eingesetzt werden, können auch die Anforderungen einer A-Brandklasse erfüllt sein.

In weiterer Ausgestaltung der Erfindung kann die Vliesdeckschicht an ihrer Unterseite auf einer Trittschalldämmungsschicht aufliegen bzw. mit einer solchen Trittschalldämmungsschicht einteilig verbunden sein. Die Trittschalldämmungsschicht weist vorzugsweise PU-Schaummaterial und insbesondere recycelten PU-Schaum auf. Im letzteren Fall sind gehexelte PU-Schaumstücke durch entsprechende Behandlung (beispielsweise Wärmebehandlung und Klebemittel) zu einer Schaumlage verarbeitet. Die für die Trittschalldämmung in Frage kommenden Raumgewichte von PU-Schaum (originär hergestellt oder recycelt) liegen zwischen 100 kg/m³ und 200 kg/m³. Die Dicke der Trittschalldämmungsschicht kann beispielsweise zwischen 0,2 mm und 10 mm liegen und insbesondere zwischen 4 mm und 5 mm betragen.

In weiterer zweckmäßiger Ausgestaltung der Erfindung kann vorgesehen sein, dass die Vliesdeckschicht und die Trittschalldämmungsschicht einander winkelseitig überlappen, so dass benachbarte Doppelschichtanordnungen aus Vliesdeckschicht und Trittschalldämmungsschicht überlappend verlegt werden können.

Schließlich kann es von Vorteil sein, die Vliesdeckschicht mit unterseitiger Verklebung als von einem beispielsweise Schaumstoff aufweisenden Dämmstreifen seitlich abstehend anzuordnen. Eine derartige Anordnung kann als Randdämmstreifen eingesetzt werden. Der im Verlegezustand hochkant angeordnete Dämmstreifen aus beispielsweise Schaumstoff oder nicht-entflammbaren (insbesondere Faser-)Material liegt mit seinem einen Längsrand auf dem nicht trittschallgedämmten Untergrund auf, während er mit seiner einen Seite an der Wand anliegt. Der von der anderen bzw. über die andere Seite des Dämmstreifens abstehende Vliesdeckstreifen steht in einer derartigen Höhe (in einem derartigen Abstand) vom Untergrund ab, dass der Vliesdeckstreifen auf der Wärmedämmung bzw. Wärme- und Trittschalldämmung oben aufliegt. Alternativ kann vorgesehen sein, den Randdämmstreifen winkelförmig auszugestalten, so dass der eigentliche Dämmstreifen auf der Wärme- bzw. Wärme- und Trittschalldämmung aufliegt, und zwar mit seinem einen Längsrand, von dem dann der Vliesdeckstreifen seitlich absteht. Durch die Klebeschicht unterseitig des Vliesdeckstreifens lässt sich dieser in demjenigen Bereich, in dem der Vliesdeckstreifen nicht vom Dämmstreifen absteht, mit dem Dämmstreifen verkleben. Im letztgenannten Fall entsteht dadurch eine winkelförmige Struktur, während im davor beschriebenen erstgenannten Fall eine Art T-förmige Struktur entsteht.

Der zuvor beschriebene Randdämmstreifen liegt mit seinem Vliesdeckstreifen oben auf der Vliesdeckschicht auf, indem der abstehende Bereich des Vliesdeckstreifens die im Übrigen verlegte Vliesdeckschicht an deren zu den Wänden eines Raumes weisenden Rändern überlappt.

Die Erfindung wird nachfolgend anhand zweier Ausführungsbeispiele und unter Bezugnahme auf die Zeichnung näher erläutert. Im Einzelnen zeigen dabei:
- Fig. 1: eine perspektivische Darstellung eines Aufbaus einer Flächenheizung auf einem bereits bestehenden Untergrund, wie er beispielsweise in der Anwendung bei der Renovation anzutreffen ist, und
- Fig. 2: eine Darstellung des Aufbaus einer Flächenheizung mit bauseitig auf einem Untergrund bereitgestellter Wärme- und/oder Trittschalldämmung.

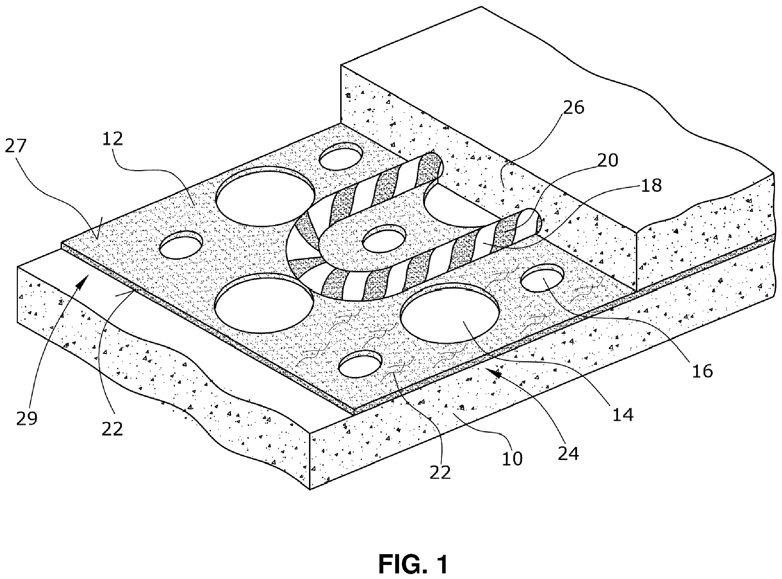

In Fig. 1 ist ein Ausschnitt eines Fußbodenheizungsaufbaus gezeigt, bei dem die Fußbodenheizung nachträglich auf einem bereits erstellten Bodenaufbau 10 installiert wird (Renovationsanwendung). Auf der Oberfläche des Bodenaufbaus 10 wird eine Vliesdeckschicht 12 aus PES-Fasern (z.B. als Rezyklat oder Regenerat) ausgelegt und mit dem Fußbodenaufbau 10 verklebt. Die Vliesdeckschicht 12 weist mehrere insbesondere ausgestanzte Löcher 14,16 auf. Auf der Vliesdeckschicht 12 wird ein Rohr 18 verlegt, bei dem es sich beispielsweise um ein Metall-/Kunststoffverbundrohr handeln kann. Die Außenseite des Rohres 18 ist mit einem insbesondere selbstklebenden Trägerband mit Verhakungselementen 20 als der eine Teil eines Klettenverschlusssystems versehen, wobei das Trägerband beispielsweise wendelförmig um das Rohr 18 herum verläuft. Die Verhakungselemente 20 verhaken sich mit den Fasern 22 der Vliesdeckschicht 12 (in den Figuren sind nur einige wenige Fasern 22 angedeutet; die gesamte Vliesdeckschicht 12 weist jedoch durchgängig Fasern 22 auf), wodurch das zu verlegende Rohr 18 fixiert ist. Insoweit bildet also die Vliesdeckschicht 12 eine Verlegevorrichtung 24.

Die Vliesdeckschicht 12 weist eine obere Lage 27 mit hydrophobisierten oder hydrophoben Fasern auf und ist ferner versehen mit einer unteren Lage 28 mit PES-Schmelzfasern. Zwischen diesen beiden Lagen und somit im Bereich 29 zwischen ihnen befinden sich PES-Fasern, die nicht notwendigerweise hydrophobisiert oder hydrophob oder als Schmelzfasern ausgeführt sein müssen. Die Flächengewichte und Faserfeinheiten der PES-Fasern der drei zuvor genannten Zonen können gleich oder unterschiedlich sein, wie weiter oben bereits beschrieben ist. Die Oberseite der Vliesdeckschicht 12 ist typischerweise aufgeraut, wie es durch das Bezugszeichen 22 angedeutet ist.

Auf dem so verlegten Rohr 18 bzw. auf den so verlegten Rohren 18 wird anschließend ein Estrich 26 aufgetragen, der im Bereich der Löcher 14,16 einen Verbund mit dem bestehenden Bodenaufbau 10 bildet und im Übrigen durch die Vliesdeckschicht 12 vom Bodenaufbau 10 getrennt ist.

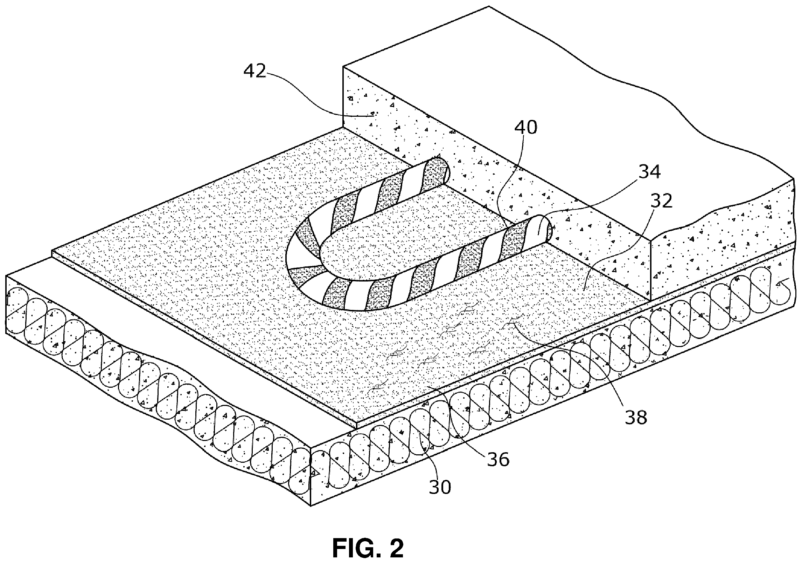

In Fig. 2 ist ein Ausschnitt eines Fußbodenheizungsaufbaus gezeigt, bei dem auf dem Rohbeton zunächst Wärme- und/oder Trittschalldämmmaterial 30 aufgebracht wird. Dieses Material wird beispielsweise in Form von nebeneinander angeordneten Platten oder Bahnen ausgelegt, woraufhin dann als Verlegevorrichtung 32 für das oder die Rohre 34 eine Vliesdeckschicht 36 mit PES-Fasern 38 ausgelegt wird, die so, wir für die Fasern der Vliesdeckschicht 12 der Fig. 1 beschrieben, beschaffen sind. Alternativ kann die Vliesdeckschicht 36 auch werkseitig auf den Platten der Wärme- und/oder Trittschalldämmung aufgebracht sein. Das Rohr 34 ist wiederum wendelförmig von einem vorzugsweise selbstklebenden Trägermaterial mit Verhakungselementen 40 eines Klettenverschlusssystems versehen, die sich mit den Fasern 38 der Vliesdeckschicht 36 verhaken und somit das zu verlegende Rohr 34 fixieren.

Auf das so verlegte Rohr 34 bzw. auf die so verlegten Rohre 34 und die Vliesdeckschicht 36 wird anschließend Estrich 42 aufgebracht, der über seine gesamte Fläche durch die Vliesdeckschicht 36 gegenüber der Dämmmaterialschicht 30 getrennt ist. Mit Vorteil ist dabei vorgesehen, dass die Vliesdeckschicht 36 insoweit feuchtigkeitsdicht ausgeführt ist, was beispielsweise durch die Wahl des Flächengewichts des Vlieses gelingt und insbesondere von der Dichte der Fasern, einer Wärmebehandlung des Vlieses an der Unterseite der Vliesdeckschicht mit dem Ziel des Verbindens der Fasern durch Aufschmelzen und anschließendem Abkühlen und der Verwendung von hydrophoben Fasern abhängt.

Statt der Fixierung der Leitungen oder Rohre mittels eines Klettverschlusssystems können diese auf der Vliesdeckschicht 36 auch mittels sogenannter "Tackernadeln", also mittels krampenartiger, Widerhaken aufweisender Niederhalteelemente fixiert werden.

### BEZUGSZEICHENLISTE

- 10: Fußbodenaufbau
- 12: Vliesdeckschicht
- 14: Löcher
- 16: Löcher
- 18: verlegende Rohr
- 20: Verhakungselemente
- 22: Fasern
- 24: Verlegevorrichtung
- 26: Estrich
- 27: obere Lage der Vliesdeckschicht
- 28: untere Lage der Vliesdeckschicht
- 29: mittlere Bereich der Vliesdeckschicht
- 30: Wärme-/Trittschalldämmmaterial
- 32: Verlegevorrichtung
- 34: verlegende Rohr
- 36: Vliesdeckschicht
- 38: Fasern
- 40: Verhakungselementen
- 42: Estrich

## Patentansprüche

1. Verlegevorrichtung für Leitungen einer Flächentemperiervorrichtung, insbesondere einer Fußboden- oder Wandheizung, sowie zur Auflage auf einem Untergrund, insbesondere auf einem Wärmedämm- und/oder Trittschaltdämmtuntergrund, mit
- einer Vliesdeckschicht (12) mit einer Unterseite zur Auflage auf einen Untergrund und mit einer Oberseite zur Fixierung von mindestens einer Leitung einer Flächentemperiervorrichtung, insbesondere einem Kühl- oder Heizmedium führendem Rohr (18) oder einem Heizleiter,
- wobei die Vliesdeckschicht (12) Fasern, insbesondere Stapelfasern aufweist, die durch mechanische und/oder thermische Fixierungen miteinander verbunden sind,
- wobei zumindest die Fasern in einer die Unterseite der Vliesdeckschicht (12) bildenden unteren Lage (28) neben einer mechanischen Fixierung auch thermisch verbunden sind,
- wobei zumindest die Fasern in einer die Oberseite der Vliesdeckschicht (12) bildenden oberen Lage (27) hydrophob oder hydrophobisiert sind,
- wobei die Oberseite der Vliesdeckschicht (12) aufgeraut ist,
- wobei die Vliesdeckschicht (12) Polyesterfasern aufweist oder aus Polyesterfasern besteht und
- wobei die Vliesdeckschicht (12) eine Grammatur zwischen 50g/m² und 180g/m² oder zwischen 80g/m² bis 150g/m² und eine Faserfeinheit zwischen 1,0 dtex und 50,0 dtex aufweist.

2. Verlegevorrichtung nach Anspruch 1, **dadurch gekennzeichnet, dass** zumindest die Fasern der unteren Lage Bikomponenten-Fasern aufweisen oder aus diesen bestehen, die mit einem Kern aus Polyester mit einem ersten Schmelzpunkt und mit einem Mantel aus Polyester mit einem gegenüber dem ersten den Kern maßgebenden Schmelzpunkt niedrigeren zweiten Schmelzpunkt versehen sind.

3. Verlegevorrichtung nach Anspruch 1 oder 2, **dadurch gekennzeichnet, dass** die Vliesdeckschicht (12) eine Dicke zwischen 0,5 mm und 1,5 mm bei 0,5kPa Auflast nach Norm DIN EN ISO 9073-2-1969 aufweist.

4. Verlegevorrichtung nach einem der Ansprüche 1 bis 3, **dadurch gekennzeichnet, dass** die Vliesdeckschicht (12) Polyester-Bikomponenten-Schmelzfasern mit einer Faserfeinheit zwischen 1,0 dtex und 6,7 dtex und einer Grammatur zwischen 5 g/m² und 20 g/m², hydrophobe oder hydrophobisierte Fasern mit einer Faserfeinheit zwischen 1,0 dtex und 6,7 dtex und einer Grammatur zwischen 10 g/m² und 80 g/m² und insbesondere im Bereich (29) zwischen der oberen und der unteren Schicht befindliche Polyester-Fasern mit einer Faserfeinheit zwischen 1,5 dtex und 50,0 dtex und einer Grammatur zwischen 50 g/m² und 200 g/m² aufweist.

5. Verlegevorrichtung nach einem der Ansprüche 1 bis 4, **dadurch gekennzeichnet, dass** die Oberseite der Vliesdeckschicht (12) zur Fixierung von Rohren (18) mittels außen an diesen angeordneter Verhakungselementen (20) oder mittels über die Rohre (18) verlaufender Verhakungselemente (20) vorgesehen ist.

6. Verlegevorrichtung nach einem der Ansprüche 1 bis 4, **dadurch gekennzeichnet, dass** die Oberseite der Vliesdeckschicht (12) zur Fixierung von Rohren (18) mittels durch die Vliesdeckschicht (12) hindurch in den Untergrund eintreibbarer, mit Widerhaken versehener Niederhalteelementen oder mittels auf der Oberseite der Vliesdeckschicht (12) befestigter, insbesondere beklebter Halteschienen mit Rohrklemmaufnahmenuten vorgesehen ist.

7. Verlegevorrichtung nach Anspruch 6, **dadurch gekennzeichnet, dass** der Untergrund Plattenelemente mit einem Wärme- und/oder Trittschalldämmmaterial aufweist, das insbesondere Mineralfasern, EPS, PE-Schaum, Kork, Sisal, tierische oder pflanzliche Wolle, Haare, Kokos, Heu, Getreidestroh, Hanf, Holzwolle, Holzfasern, Holzwolleverbundprodukte, Laub oder andere alternative Dämmstoffe oder nachwachsende dämmende Rohrstoffe und/oder einen Misch- oder Mehrlagenverbund der genannten Materialien aufweist.

8. Verlegevorrichtung nach Anspruch 7, **dadurch gekennzeichnet, dass** die Vliesdeckschicht (12) mit dem Wärme- und/oder Trittschalldämmmaterial (30) verklebt und/oder vernäht und/oder an dieses geheftet ist.

9. Verlegevorrichtung nach einem der Ansprüche 1 bis 8, **dadurch gekennzeichnet, dass** die Vliesdeckschicht (12) Löcher (14,16) aufweist, und zur Auflage auf einem in Form eines Boden- oder Wandaufbaus ausgebildeten Untergrund vorgesehen ist.

10. Verlegevorrichtung nach einem der Ansprüche 1 bis 9, **dadurch gekennzeichnet, dass** die Polyesterfasern der Vliesdeckschicht (12) aus Polyester-Rezyklat und/oder -Regenerat bestehen.

11. Flächentemperiervorrichtung, insbesondere Fußboden- oder Wandheizung, mit
- mindestens einer Leitung, insbesondere einem ein Kühl- oder Heizmedium führenden Rohr (18) oder einem Heizleiter,
- einer Verlegevorrichtung (24) für die mindestens eine Leitung nach einem der vorhergehenden Ansprüche,
- wobei die mindestens eine Leitung an ihrer Außenseite Verhakungselemente (20) zum Verhaken mit der Vliesdeckschicht (12) der Verlegevorrichtung aufweist und/oder
- wobei mit Verhakungselementen versehene Niederhalteelemente vorgesehen sind, die über die mindestens eine Leitung verlaufen und sich mittels ihrer Verhakungselemente mit der Vliesdeckschicht (12) verhaken, und/oder
- wobei mit Widerhakenelementen versehene Niederhalteelemente zum Übergreifen der mindestens einen Leitung und zum Durchdringen der Vliesdeckschicht (12) und zum Eintreiben in den Untergrund vorgesehen sind.

12. Flächentemperiervorrichtung nach Anspruch 11, **dadurch gekennzeichnet, dass** der Untergrund Plattenelemente mit einem Wärme- und/oder Trittschalldämmmaterial aufweist, das insbesondere Mineralfasern, EPS, PE-Schaum, Kork, Sisal, tierische oder pflanzliche Wolle, Haare, Kokos, Heu, Getreidestroh, Hanf, Holzwolle, Holzfasern, Holzwolleverbundprodukte, Laub oder andere alternative Dämmstoffe oder nachwachsende dämmende Rohrstoffe und/oder einen Misch- oder Mehrlagenverbund der genannten Materialien aufweist.

13. Flächentemperiervorrichtung nach Anspruch 11 oder 12, **dadurch gekennzeichnet, dass** die Vliesdeckschicht (12) mit dem Wärme- und/oder Trittschalldämmmaterial (30) vernäht und/oder an dieses geheftet und/oder mit diesem verklebt und/oder mit diesem Ultraschall-verschweißt ist.

14. Flächentemperiervorrichtung nach einem der Ansprüche 11 bis 13,
**dadurch gekennzeichnet, dass** der Untergrund als Boden- oder Wandaufbau ausgebildet ist und dass die Vliesdeckschicht (12) Löcher (14, 16) aufweist.

15. Flächentemperiervorrichtung nach einem der Ansprüche 1 bis 14,
**dadurch gekennzeichnet, dass** die Vliesdeckschicht (12) flammhemmende Fasern, insbesondere Aramit-Fasern aufweist.
